# FASCICULE DE BREVET EUROPEEN

(11) **EP 2 026 997 B1**
(45) Date de publication et mention de la délivrance du brevet: **20.01.2010**
(21) Numéro de dépôt: 07823518.1
(22) Date de dépôt: 12.06.2007
(51) Int. Cl.: B60R 22/48

(54) **SYSTEME DE DETECTION DE BOUCLAGE DE CEINTURE DANS UN VEHICULE AUTOMOBILE**
SYSTEM ZUR ERKENNUNG DER BEFESTIGUNG EINES SITZGURTES IN EINEM KRAFTFAHRZEUG
SYSTEM FOR DETECTING THE FASTENING OF A SEAT BELT IN A MOTOR VEHICLE

(30) Priorité: 15.06.2006 FR 0652143
(43) Date de publication de la demande: 25.02.2009
(73) Titulaire: PEUGEOT CITROËN AUTOMOBILES SA, 78140 Velizy-Villacoublay (FR)
(72) Inventeur: FOURE, Franck, F-90000 Belfort (FR)
(86) Numéro de dépôt international: PCT/FR2007/051412
(87) Numéro de publication internationale: WO 2008/012451

(56) Documents cités:
- EP-A- 1 002 690
- EP-A- 1 588 908
- US-A1- 2003 137 411

## Description

La présente invention concerne un système de détection de bouclage de ceinture destiné à un véhicule automobile notamment du type comprenant des sièges interchangeables.

I1. est connu du document EP1588908 un véhicule comprenant des sièges interchangeables entre différents emplacements prédéfinis dans le véhicule.

Chaque siège comprend une boucle apte à recevoir une languette d'une ceinture de sécurité pour fermer cette ceinture, et un circuit incluant une antenne apte à fournir une information d'absence de languette dans la boucle, à un système centralisé pour activer une alerte en cas d'absence de languette, c'est à dire en cas de ceinture non bouclée.

Dans ce véhicule connu, le système centralisé comprend une antenne principale située au niveau du plancher, et chaque boucle est équipée d'un circuit incluant une antenne apte à communiquer avec l'antenne principale.

Dans ce véhicule connu, le système centralisé interroge périodiquement les différentes boucles pour émettre une alerte en cas d'absence d'une languette correspondant à une ceinture non bouclée sur un siège dans lequel est installé un occupant.

Les signaux échangés ont cependant des puissances relativement importantes qu'il est préférable de limiter afin d'éviter toute perturbation des organes du véhicule et d'autres équipements sans fil tels que les téléphones portables.

Le but de l'invention est de remédier aux inconvénients précités.

A cet effet, l'invention concerne un véhicule comprenant des sièges interchangeables entre différents emplacements prédéfinis dans le véhicule, chaque siège comprenant une boucle apte à recevoir une languette de ceinture de sécurité, chaque siège comprenant un circuit électrique ou électronique incluant une antenne secondaire apte à fournir une information d'absence de languette dans la boucle, via cette antenne, à un système centralisé pour activer une alerte en cas d'absence de languette, caractérisé en ce que le système centralisé comprend au moins une antenne primaire à chaque emplacement de siège.

Selon une autre caractéristique de l'invention, chaque antenne secondaire est située au niveau de la face inférieure du siège qu'elle équipe, chaque antenne primaire est située au niveau du plancher du véhicule, et lorsqu'un siège est monté dans un emplacement, son antenne secondaire est située en vis-à-vis de l'antenne primaire correspondante.

Selon une autre caractéristique de l'invention, les antennes primaires sont intégrées dans un seul et même boîtier.

Selon une autre caractéristique de l'invention, chaque circuit comprend un contacteur électrique intégré à la boucle du siège, ce contacteur modifiant l'impédance du circuit selon qu'il est fermé ou ouvert.

Selon une autre caractéristique de l'invention, chaque siège comprend deux boucles, le circuit étant apte à fournir une information d'absence de languette sélectivement pour chaque boucle. Selon une autre caractéristique de l'invention, les impédances introduites par les deux contacteurs diffèrent.

Selon une autre caractéristique de l'invention, les antennes primaires sont des bobinages générant des champs magnétiques lorsqu'elles sont parcourues par un courant alternatif, et dans lequel les circuits des sièges avec leurs antennes secondaires sont passifs.

Selon une autre caractéristique de l'invention, chaque circuit équipant un siège est apte à fournir une information de présence de passager au système centralisé.

L'invention sera maintenant décrite en détail, en référence aux figures annexées.
- la figure 1 est une vue d'un rang arrière muni de trois sièges d'un véhicule automobile selon l'invention;
- la figure 2 est une vue du rang arrière de la figure 1 muni de deux sièges recentrés relativement à la figure 1.

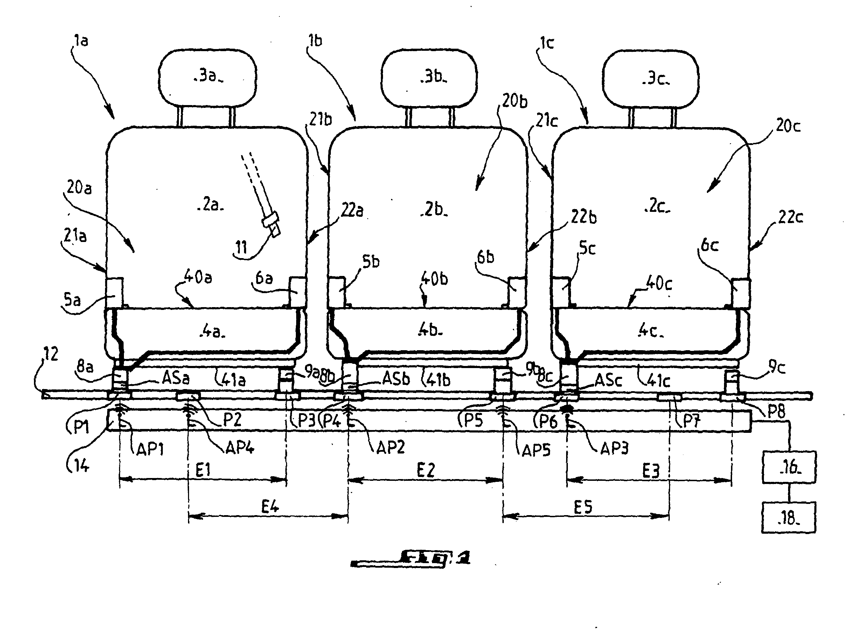

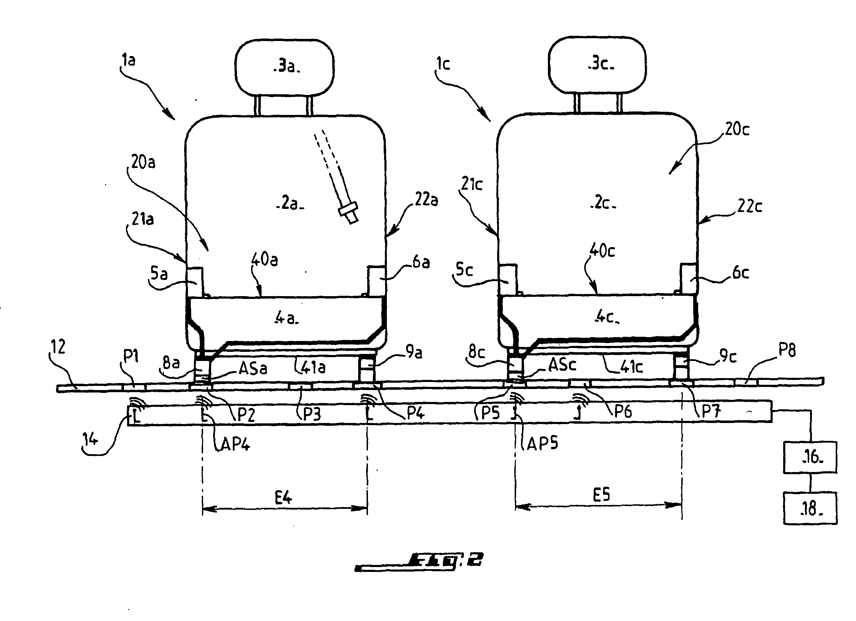

Les figures 1 et 2 représentent un rang arrière d'un véhicule automobile pouvant comprendre jusqu'à trois sièges 1a, 1b, 1c amovibles et interchangeables.

Les sièges 1a, 1b, 1c et leurs composants sont identiques et portent des références numériques similaires suivi d'une lettre a ou b ou c selon le siège en question.

Chaque siège 1a, 1b, 1c comprend un dossier 2a, 2b, 2c sur lequel est monté un appui-tête 3a, 3b, 3c, une assise 4a, 4b, 4c et deux pieds 8a, 8b, 8c et 9a, 9b, 9c,.

Les pieds sont solidaires de la face inférieure 41a, 41b, 41c de l'assise 4a, 4b, 4c, et sont destinés à coopérer avec des points d'ancrage P1, P2, P3, P4, P5, P6 montés alignés dans une baguette 12 fixée au plancher du véhicule.

Chaque siège 1a, 1b, 1c peut occuper cinq emplacements E1, E2, E3, E4, E5 différents et prédéfinis par les positions des points d'ancrage P1, P2, P3, P4, P5, P6 pouvant chacun recevoir l'un ou l'autre des pieds 8a, 8b, 8c et 9a, 9b, 9c d'un siège 1a, 1b, 1c.

Sur la figure 1, le rang est équipé de trois sièges 1a, 1b, 1c qui sont positionnés au niveau des emplacements E1, E2, E3, les pieds 8a, 8b, 8c et 9a, 9b, 9c des sièges 1a, 1b, 1c étant engagés respectivement dans les points d'ancrages P1, P4, P6 et P3, P5, P8.

Sur la figure 2, le rang est équipé de deux sièges 1a et 1c qui sont positionnés au niveau des emplacements E4 et E5, les pieds 8a, 8c et 9a, 9c des sièges 1a, 1b, 1c étant engagés respectivement dans les points d'ancrages P2, P5 et P4, P7.

Chaque siège 1a, 1b, 1c comprend deux boucles 5a, 5b, 5c et 6a, 6b, 6c apte à recevoir une languette 11 de ceinture de sécurité, ces ceintures de sécurité étant par ailleurs fixées à d'autres points d'attaches solidaires de l'habitacle du véhicule.

Ces boucles 5a, 5b, 5c et 6a, 6b, 6c sont placées au niveau de la face avant 20a, 20b, 20c du dossier 2a, 2b, 2c à hauteur de la face supérieure 40a, 40b, 40c de l'assise 1a, 1b, 1c. Les boucles 5a, 5b, 5c et 6a, 6b, 6c sont adjacentes aux bords latéraux respectivement gauche 21a, 21b, 21c et droit 22a, 22b, 22c du dossier 2a, 2b, 2c.

Ainsi, en considérant la figure 1, un occupant assis sur le siège latéral 1a a bouclé sa ceinture de sécurité si une languette 11 est engagée dans la boucle 6a; un occupant assis sur le siège latéral 1c a bouclé sa ceinture de sécurité si une languette 11 est engagée dans la boucle 5c; et un occupant assis sur le siège central 1b a bouclé sa ceinture de sécurité si des languettes 11 sont engagées dans la boucle 5b et/ou dans la boucle 6b.

Afin de détecter la présence ou l'absence de languette 11 dans les différentes boucles 5a, 5b, 5c, 6a, 6b, 6c, chaque siège 1a, 1b, 1c comprend un circuit électrique ou électronique.

Ce circuit électrique est apte à fournir une information d'absence de languette 11 dans chaque boucle et à la transmettre, via une antenne dite secondaire ASa, ASb, ASc, à un système centralisé 16 du véhicule afin qu'il active une alerte en cas d'absence de languette 11.

Selon l'invention, le système centralisé 16, recevant des informations des antennes secondaires ASa, ASb, ASc des sièges 1a, 1b, 1c, comprend au moins une antenne dite primaire AP1, AP2, AP3, AP4, AP5, AP6 à chaque emplacement E1, E2, E3, E4, E5 de siège.

Le circuit électrique de chaque siège 1a, 1b, 1c détecte la présence ou l'absence de languette 11 dans les boucles 5a, 5b, 5c, 6a, 6b, 6c, grâce à un contacteur électrique intégré dans chaque boucle 5a, 5b, 5c et 6a, 6b, 6c.

Chaque circuit est électriquement relié aux contacteurs de présence ou d'absence de languette 11 du siège 1a, 1b, 1c auquel il est intégré, et est conçu pour que son impédance soit modifiée selon que ces contacteurs sont ouverts ou fermés.

Afin de fournir des informations d'absence ou de présence de languette 11 sélectivement pour chaque boucle 5a, 5b, 5c et 6a, 6b, 6c, les impédances introduites par l'ouverture ou la fermeture des contacteurs des deux boucles d'un même siège diffèrent l'une de l'autre.

Ces informations de présence ou d'absence de languette 11 sont transmises, via les antennes secondaires ASa, ASb, ASc respectivement situées au niveau des pieds 8a, 8b, 8c des sièges 1a, 1b, 1c, aux antennes primaires AP1, AP2, AP3, AP4, AP5, AP6 situées au niveau du plancher du véhicule.

Comme indiqué plus haut, les antennes primaires AP1, AP2, AP3, AP4, AP5, AP6 sont situées en vis-à-vis et à une très faible proximité des antennes secondaires ASa, ASb, ASc correspondantes lorsque les sièges 1a, 1b, 1c sont montés dans les emplacements E1, E2, E3, E4, E5.

Cette faible proximité permet d'assurer un échange de données entre chaque paire d'antenne primaire AP1, AP2, AP3, AP4, AP5, AP6 et secondaire ASa, ASb, ASc avec un très faible niveau de rayonnement électromagnétique, ce qui permet de ne pas perturber d'autres communications sans fil ayant lieu dans le véhicule.

De plus, cette faible proximité, en association avec des puissances électriques suffisamment faibles, assure qu'une antenne primaire AP1, AP2, AP3, AP4, AP5, AP6 d'un emplacement ne peut communiquer qu'avec une antenne secondaire ASa, ASb, ASc d'un siège situé à cet emplacement E1, E2, E3, E4, E5.

Avantageusement, les antennes primaires AP1, AP2, AP3, AP4, AP5, AP6 sont montées dans un boîtier 14 fixé au plancher du véhicule. Ce boitier 14 est fixé au plancher du véhicule par une seule fixation et un seul pion d'alignement de manière à en faciliter le montage et le remplacement après-vente.

L'opérateur de montage n'a ainsi pas à se soucier des problèmes de centrage des antennes. Le système est toutefois configuré pour supporter une excentration du siège par rapport au plancher de l'ordre de 2 cm due par exemple au vieillissement mécanique de la structure du véhicule et des sièges.

Les antennes primaires AP1, AP2, AP3, AP4, AP5, AP6 liées au système centralisé 16 sont des bobinages générant des champs magnétiques lorsqu'elles sont parcourues par un courant alternatif.

Le circuit électrique de chaque siège 1a, 1b, 1c est alimenté par le couplage inductif que forment l'antenne primaire AP1, AP2, AP3, AP4, AP5, AP6 et l'antenne secondaire Asa, ASb, ASc correspondante. Ainsi, les circuits électriques ou électroniques équipant les sièges sont passifs et ne nécessite donc aucune batterie d'alimentation.

Pour déterminer l'état de bouclage des ceintures d'un siège 1a, 1b, 1c, le système centralisé 16 applique aux antennes primaires AP1, AP2, AP3, AP4, AP5, AP6, une tension pulsée ou alternative et mesure par exemple le déphasage et l'amplitude du courant résultant.

Ces mesures permettent au système centralisé 16 de déterminer la valeur de l'impédance du circuit électrique de chaque siège 1a, 1b, 1c présent, cette valeur d'impédance reflétant l'état fermé ou ouvert de chaque boucle 5a, 5b, 5c, 6a, 6b, 6c des sièges 1a, 1b, 1c présents.

L'information de bouclage ou de non-bouclage de la ceinture d'un siège 1a, 1b, 1c transmise au système centralisé 16 du véhicule est alors affichée, par exemple sous forme d'icônes, par un système d'affichage 18 lié au système centralisé 16.

Chaque circuit équipant un siège 1a, 1b, 1c comprend avantageusement un troisième contacteur électrique de présence de passager pour fournir également une information de présence de passager au système centralisé 16.

Un tel système offre une détection de bouclage de ceinture destiné à un véhicule automobile notamment du type comprenant des sièges interchangeables qui est fiable, invisible et qui ne nécessite aucune intervention supplémentaire de la personne mettant en place les sièges dans le véhicule.

Grâce à la proximité des antennes primaires et secondaires, le champ magnétique émis est très localisé et de faible puissance, de sorte qu'il ne perturbe pas les organes électriques environnants.

Le système centralisé peut être conçu pour interroger sélectivement les différentes antennes primaires AP1, AP2, AP3, AP4, AP5, AP6 qui correspondent chacune à un emplacement E1, E2, E3, E4, E5 de siège.

Ceci permet de détecter de façon très simple la présence ou l'absence d'un siège 1a, 1b, 1c, à chaque emplacement E1, E2, E3, E4, E5.

Ceci permet également au système centralisé d'identifier l'emplacement E1, E2, E3, E4, E5 auquel une ceinture non bouclée est détectée, pour spécifier cet emplacement, par exemple sous forme d'icônes spécifiques.

## Revendications

1. Véhicule comprenant des sièges (1a, 1b, 1c) interchangeables entre différents emplacements (E1, E2, E3, E4, E5) prédéfinis dans le véhicule, chaque siège (1a, 1b, 1c) comprenant une boucle (5a, 5b, 5c, 6a, 6b, 6c) apte à recevoir une languette (11) de ceinture de sécurité, chaque siège (1a, 1b, 1c) comprenant un circuit électrique ou électronique incluant une antenne dite secondaire (ASa, ASb, ASc) apte à fournir une information d'absence de languette (11) dans la boucle (5a, 5b, 5c, 6a, 6b, 6c), via cette antenne (ASa, ASb, ASc), à un système centralisé (16) pour activer une alerte en cas d'absence de languette (11), **caractérisé en ce que** le système centralisé (16) comprend au moins une antenne dite primaire (AP1, AP2, AP3, AP4, AP5, AP6) à chaque emplacement (E1, E2, E3, E4, E5) de siège.

2. Véhicule selon la revendication 1, dans lequel chaque antenne secondaire (ASa, ASb, ASc) est située au niveau de la face inférieure (41a, 41b, 41c) du siège (1a, 1b, 1c) qu'elle équipe, chaque antenne primaire est située au niveau du plancher du véhicule, et dans lequel lorsqu'un siège est monté dans un emplacement (E1, E2, E3, E4, E5), son antenne secondaire (ASa, ASb, ASc) est située en vis-à-vis de l'antenne primaire (AP1, AP2, AP3, AP4, AP5, AP6) correspondante.

3. Véhicule selon l'une des revendications 1 ou 2, dans lequel les antennes primaires (AP1, AP2, AP3, AP4, AP5, AP6) sont intégrées dans un seul et même boîtier (14).

4. Véhicule selon l'une des revendications 1 à 3, dans lequel chaque circuit comprend un contacteur électrique intégré à la boucle (5a, 5b, 5c, 6a, 6b, 6c) du siège (1a, 1b, 1c), ce contacteur modifiant l'impédance du circuit selon qu'il est fermé ou ouvert.

5. Véhicule selon l'une des revendications 1 à 4, dans lequel chaque siège (1a, 1b, 1c) comprend deux boucles (5a, 5b, 5c, 6a, 6b, 6c), le circuit étant apte à fournir une information d'absence de languette (11) sélectivement pour chaque boucle(5a, 5b, 5c, 6a, 6b, 6c).

6. Véhicule selon les revendications 4 et 5, dans lequel les impédances introduites par les deux contacteurs diffèrent.

7. Véhicule selon l'une des revendications 1 à 6, dans lequel les antennes primaires (AP1, AP2, AP3, AP4, AP5, AP6) sont des bobinages générant des champs magnétiques lorsqu'elles sont parcourues par un courant alternatif, et dans lequel les circuits des sièges (1a, 1b, 1c) avec leurs antennes secondaires (ASa, ASb, ASc) sont passifs.

8. Véhicule selon l'une des revendications 1 à 7, dans lequel chaque circuit équipant un siège (1a, 1b, 1c) est apte à fournir une information de présence de passager au système centralisé (16).

## Claims

1. Vehicle including seats (1a, 1b, 1c) that are interchangeable between various predefined positions (E1, E2, E3, E4, E5) in the vehicle, each seat (1a, 1b, 1c) including a buckle (5a, 5b, 5c, 6a, 6b, 6c) that is capable of receiving a strap (11) of a safety belt, each seat (1a, 1b, 1c) including an electrical or electronic circuit including an antenna defined as secondary (ASa, ASb, ASc) that is able to provide information regarding the absence of the strap (11) in the buckle (5a, 5b, 5c, 6a, 6b, 6c), via the antenna (ASa, ASb, ASc) to a central system (16) for activating an alarm if the strap (11) is not present, **characterized in that** the central system (16) includes at least one antenna defined as primary (AP1, AP2, AP3, AP4, AP5, AP6) at each seat position (E1, E2, E3, E4, E5).

2. Vehicle as recited in claim 1, in which each secondary antenna (ASa, ASb, ASc) is located level with the lower surface (41a, 41b, 41c) of the seat (1a, 1b, 1c) to which it is assigned, each primary antenna is located level with the floor of the vehicle, and in which when a seat is mounted in a position (E1, E2, E3, E4, E5) its secondary antenna (ASa, ASb, ASc) is located facing the corresponding primary antenna (AP1, AP2, AP3, AP4, AP5, AP6).

3. Vehicle as recited in either of claims 1 or 2, in which the primary antennas (AP1, AP2, AP3, AP4, AP5, AP6) are integrated in one and the same housing (14).

4. Vehicle as recited in any of claims 1 to 3, in which each circuit includes an electrical switch integrated in the buckle (5a, 5b, 5c, 6a, 6b, 6c) of the seat (1a, 1b, 1c), and this switch modifies the impedance of the circuit according to whether it is closed or open.

5. Vehicle as recited in any of claims 1 to 4, in which each seat (1a, 1b, 1c) includes two buckles (5a, 5b, 5c, 6a, 6b, 6c), and the circuit is capable of providing information regarding the absence of strap (11) selectively for each buckle (5a, 5b, 5c, 6a, 6b, 6c).

6. Vehicle as recited in either of claims 4 or 5, in which the impedances induced by the two switches are different.

7. Vehicle as recited in any of claims 1 to 6, in which the primary antennas (AP1, AP2, AP3, AP4, AP5, AP6) are coils that generate magnetic fields when an alternating current is passed through them, and in which the circuits of the seats (1a, 1b, 1c) with their secondary antennas (ASa, ASb, ASc) are passive.

8. Vehicle as recited in any of claims 1 to 7, in which each circuit assigned to a seat (1a, 1b, 1c) is able to supply information regarding the presence of a passenger to the central system (16).

## Patentansprüche

1. Fahrzeug, das Sitze (1a, 1b, 1c) aufweist, die zwischen verschiedenen vorbestimmten Stellen (E1, E2, E3, E4, E5) in dem Fahrzeug austauschbar sind, wobei jeder Sitz (1a, 1b, 1c) eine Schnalle (5a, 5b, 5c, 6a, 6b, 6c) aufweist, die eine Lasche (11) eines Sicherheitsgurts aufnehmen kann, wobei jeder Sitz (1a, 1b, 1c) eine elektrische oder elektronische Schaltung aufweist, die eine so genannte Nebenantenne (ASa, ASb, ASc) aufweist, die eine Information der Abwesenheit der Lasche (11) in der Schnalle (5a, 5b, 5c, 6a, 6b, 6c) über diese Antenne (ASa, ASb, ASc) an ein zentrales System (16) melden kann, um eine Warnung in dem Fall der Abwesenheit der Lasche (11) zu aktivieren, **dadurch gekennzeichnet, dass** das zentrale System (16) mindestens eine so genannte Hauptantenne (AP1, AP2, AP3, AP4, AP5, AP6) an jeder Sitzstelle (E1, E2, E3, E4, E5) aufweist.

2. Fahrzeug nach Anspruch 1, bei dem jede Nebenantenne (ASa, ASb, ASc) auf dem Niveau der unteren Seite (41a, 41b, 41c) des Sitzes (1a, 1b, 1c), den sie ausstattet, liegt, wobei jede Hauptantenne auf dem Niveau des Fußbodens des Fahrzeugs liegt, und bei dem, wenn ein Sitz an einer Stelle (E1, E2, E3, E4, E5) montiert ist, seine Nebenantenne (ASa, ASb, ASc) gegenüber der entsprechenden Hauptantenne (AP1, AP2, AP3, AP4, AP5, AP6) liegt.

3. Fahrzeug nach einem der Ansprüche 1 oder 2, bei dem die Hauptantennen (AP1, AP2, AP3, AP4, AP5, AP6) in ein einziges Gehäuse (14) eingebaut sind.

4. Fahrzeug nach einem der Ansprüche 1 bis 3, bei dem jede Schaltung einen in die Schnalle (5a, 5b, 5c, 6a, 6b, 6c) des Sitzes (1a, 1b, 1c) eingebauten elektrischen Schalter aufweist, wobei dieser Schalter die Impedanz der Schaltung je nachdem, ob er offen oder geschlossen ist, ändert.

5. Fahrzeug nach einem der Ansprüche 1 bis 4, bei dem jeder Sitz (1a, 1b, 1c) zwei Schnallen (5a, 5b, 5c, 6a, 6b, 6c) aufweist, wobei die Schaltung eine Information der Abwesenheit der Lasche (11) selektiv für jede Schnalle (5a, 5b, 5c, 6a, 6b, 6c) liefern kann.

6. Fahrzeug nach einem der Ansprüche 4 und 5, bei dem die von den zwei Schaltern erzeugten Impedanzen unterschiedlich sind.

7. Fahrzeug nach einem der Ansprüche 1 bis 6, bei dem die Hauptantennen (AP1, AP2, AP3, AP4, AP5, AP6) Wicklungen sind, die Magnetfelder erzeugen, wenn ein Wechselstrom durch sie läuft, und bei dem die Schaltungen der Sitze (1a, 1b, 1c) mit ihren Nebenantennen (ASa, ASb, ASc) passiv sind.

8. Fahrzeug nach einem der Ansprüche 1 bis 7, bei dem jede Schaltung, die einen Sitz (1a, 1b, 1c) ausstattet, eine Gegenwartsinformation eines Insassen an das zentrale System (16) liefern kann.
